# EUROPÄISCHE PATENTANMELDUNG

(11) **EP 3 721 965 A1**
(43) Veröffentlichungstag der Anmeldung: **14.10.2020**
(21) Anmeldenummer: 19168408.3
(22) Anmeldetag: 10.04.2019
(51) Int. Cl.: B01D 39/16

(54) **FILTERMEDIUM MIT VLIESSTOFF ALS EINLAGIGER FASERVERBUND UND VERFAHREN ZUR HERSTELLUNG EINES SOLCHEN FILTERMEDIUMS**

(71) Anmelder: Carl Freudenberg KG, 69469 Weinheim (DE)
(72) Erfinder: Staudenmayer, Oliver, Dr., 69469 Weinheim (DE); Schacht, Heiko, Dr., 69469 Weinheim (DE); Hollingsworth, Anthony, 69488 Birkenau (DE); Gorges, Torsten, 67688 Rodenbach (DE); Kolew, Alexander, Dr., 67468 Frankenstein (DE); Kurzer, Rosemarie, 54472 Burgen (DE); Greiner, Armin, Dr., 69469 Weinheim (DE)

(57) **Zusammenfassung**

Die Erfindung betrifft ein Filtermedium und ein Verfahren zur Herstellung eines solchen Filtermediums. Das Filtermedium (1) dient zur Filtration eines Luftstroms und besitzt einen eine Vielzahl von Bikomponentenfasern aufweisenden Vliesstoff. Erfindungsgemäß ist der Vliesstoff als einlagiger Faserverbund (2) mit einer ersten Struktur (3.1) aus Bikomponentenfasern und einer zweiten Struktur (3.2) aus endlosen Bikomponentenfasern ausgebildet, wobei die zweite Struktur (3.2) in die erste Struktur (3.1) eingreift, indem die erste Struktur mit der zweiten Struktur besponnen ist.

Die erste Struktur zusammen mit den aufgespannten Fasern der zweiten Struktur, ergeben einen sehr stabilen, einlagigen Faserverbund mit erstaunlich großer Steifigkeit, sehr hoher Luftdurchlässigkeit und hohem Staubspeichervermögen bei guter Filtrationswirkung.

## Beschreibung

Die Erfindung betrifft ein Filtermedium mit Vliesstoff gemäß dem Oberbegriff von Anspruch 1 und ein Verfahren zur Herstellung eines solchen Filtermediums gemäß Anspruch 11.

### Stand der Technik

Plissierte, d.h. gefaltete Filtermedien sind für die Verwendung in vielen Filterelementen allgemein bekannt und dienen zur Vergrößerung der Filtrationsoberfläche. Um plissierfähige und damit eigensteife Medien zu erhalten welche die Form der Falten behalten und die entsprechenden filtertechnische Leistung zu erhalten, werden die Materialien üblicherweise mehrlagig ausgestattet. Trägerschichten für synthesefaserbasierte Materialien sind üblicherweise sehr stabile Spinnvliesstoffe oder Stapelfaservliesstoffe, die aus PES-Fasern oder Polyolefinfasern bestehen. Die verwendeten Fasern können in manchen Ausbildungen als Bikomponenten-Faserstrukturen vorliegen. Thermisch gebundene Bikomponentenstrukturen ergeben normalerweise höhere Steifigkeiten als Homopolymerfasern. Während die Trägerschicht aus groben Spinn- oder Stapelfasern besteht und im Wesentlichen eine Tragefunktion bzw. Versteifungs-/Plissierfunktion hat, wird die Abscheidung von feinen Partikeln durch Mikrofasern erzeugt, die auf die Trägerschicht aufgebracht sind. Die Mikrofaserschicht allein ist nicht tragfähig und hat eine nicht ausreichende Festigkeit.

Die Mikrofaserschicht ist teilweise zusätzlich mit einem darauf laminierten Abdecker geschützt. Die Mikrofasern bestehen z.B. aus Polypropylen oder aus Polycarbonat-Polymer. Die Mikrofasern sind je nach verwendetem Polymertyp und Prozess oftmals zusätzlich elektrostatisch aufgeladen.

Ein übliches Filtermaterial für die eingangs erwähnte Anwendung besteht also aus einer steifen Spinnvliesstoffschicht mit groben Fasern, hergestellt nach dem Spinnvliesverfahren und einer feinen Mikrofaserlage, die nach dem Meltblown-Verfahren hergestellt wird. Diese beiden Lagen sind miteinander verbunden, z.B. durch ein Ultraschall Kalanderprozess. Derartige Strukturen und Prozesse sind bekannt z.B. aus WO 2010/049052 oder EP 1208 959 B1. Alternativ werden die Lagen auch z.B. mittels Hotmelt oder Sprühklebern laminiert. Neben der Kombination von Trägerstrukturen, z.B. mittels Spinnvliesstoffen mit Mikrofasern, sind auch Komposite aus Stapelfasern mit Trägerstruktur bekannt. Diese Komposite mit Stapelfasern sind gut geeignet, ein hohes Staubspeichervermögen und damit eine hohe Lebensdauer des Filters zu ermöglichen. Hier kommen oftmals triboelektrisch geladene Fasern zum Einsatz, die dann aufgrund ihrer eingeschränkten Vliesstoff-Festigkeit bzw. mangelnder Steifigkeit mit einem Träger laminiert werden. Diese Laminierung erfolgt oft z.B. mit Ultraschall, Nadeln oder der Verklebung mittels Hotmelt. All diesen Ausführungsformen ist gemeinsam, dass es sich um Laminate aus mindestens zwei unterschiedlichen Lagen mit unterschiedlichen Fasern/Faserdurchmessern handelt. Solche Komposites führen in der Praxis während der Plissierung, d.h. Faltung des Filtermaterials immer wieder zu Störungen des Prozesses, weil sich die beiden Lagen voneinander lösen oder beim Plissieren verhaken. Im Filterelement bemerkt man oftmals eine Separierung der Lagen, welche zu der Bildung von "Taschen" oder der Bildung von kleinen Falten in der Kompositematrix führt. Diese wirken sich aufgrund der Störung der Durchströmung negativ auf den Druckverlust einer Filterkassette aus, in welcher das Filtermedium eingesetzt wird.

### Aufgabenstellung

Aufgabe der vorliegenden Erfindung ist es ein Filtermedium zu schaffen, welches eine gute Stabilität, Verarbeitbarkeit und Staubspeicherfähigkeit miteinander verbindet und die Nachteile des Standes der Technik zumindest teilweise behebt. Weitere Aufgabe ist es ein Verfahren zur Herstellung eines solchen Filtermediums zu beschreiben.

Das Filtermedium benötigt eine hohe Steifigkeit damit es einfach und im industriellen Maßstab plissiert, d.h. in Falten gelegt werden kann. Für den Druckverlust des Filtermediums ist es vorteilhaft, wenn das Material relativ dünn ist. Bei möglichst dünnen Medien kann der Faltenabstand verringert werden, um dadurch den Druckverlust des Filterelementes abzusenken. Gleichzeitig ist es vorteilhaft bei vergleichbarem Druckverlust der Kassette durch Anpassung von Materialdicke, Luftdurchlässigkeit und Vliesstoffaufbau ein möglichst hohes Staubspeichervermögen in einer Kassette zu erzielen. Ein hohes Staubspeichervermögen bedeutet eine lange Lebensdauer. Um Kosten zu sparen ist man gleichzeitig bestrebt, möglichst wenig Flächenmasse bzw. Filtermedienmenge einzubringen.

### Technische Lösung

Gelöst wird diese Aufgabe durch ein Filtermedium mit den Merkmalen von Anspruch 1.

Erfindungsgemäß wurde als vorteilhaft erkannt ein Filtermedium aus einem Vliesstoff mit einer einzigen Lage zu schaffen, bei der alle Fasern miteinander verbunden sind, also einen Faserverbund bilden.

Das erfindungsgemäße Filtermedium dient der Filtration eines Luftstroms und weist einen Vliesstoff mit einer Vielzahl von Bikomponentenfasern auf. Gemäß der Erfindung ist der Vliesstoff als einlagiger Faserverbund mit einer ersten Struktur aus Bikomponentenfasern und einer zweiten Struktur aus endlosen Bikomponentenfasern ausgebildet ist, wobei die zweite Struktur in die erste Struktur eingreift, indem die erste Struktur mit der zweiten Struktur besponnen ist.

Die erste Struktur zusammen mit den aufgespannten Fasern der zweiten Struktur, ergeben ein sehr stabiles, einlagiges Material mit erstaunlich großer Steifigkeit, sehr hoher Luftdurchlässigkeit und hohem Staubspeichervermögen bei guter Filtrationswirkung.

In einer besonders vorteilhaften und daher bevorzugten Weiterbildung des erfindungsgemäßen Filtermediums sind die Bikomponentenfasern aus mindestens zwei Polymerkomponenten, deren Schmelzpunkt sich um mindestens 15 Grad unterscheidet und besitzen insbesondere eine Kern/Mantel-Faserstruktur (cover-core) oder eine bilaterale side-by-side Faserstruktur. Das bevorzugte Polymer von Kern und Mantel (bzw. side-by-side), ist Polypropylen, speziell im Kern der Faser kann aber auch Polyester eingesetzt werden. Der Anteil der beiden Komponenten von Kern und Mantel (bzw. side by side) kann zwischen 9:1 und 1:1 variieren, wobei 8:2 und 7:3 bevorzugt sind. Der kleinere Anteil ist dabei die tiefer schmelzende Komponente.

Besonders vorteilhaft ist es, wenn die Polymerkomponenten der Bikomponentenfasern aus Polyolefinen bestehen, z.B. aus Polypropylen (PP). Es wurde als vorteilhaft erkannt, dass sich die Polymerarten der tiefschmelzenden Polymerkomponente der Bikomponentenfasern von erster und zweiter Struktur entsprechen, um eine Materialeinheitlichkeit zu gewährleisten, d.h. die tiefschmelzende Polymerkomponente der Bikomponentenfasern von erster und zweiter Struktur sind gleichartige Polymere.

In dem erfindungsgemäßen Filtermedium können die Bikomponentenfasern der ersten Struktur als Stapelfasern, als Spinnvliesstoff-Filamente, als Kombination dieser Technologies und ggf. zusammen mit Meltblown-Filamenten ausgeführt sein.

Besonders bevorzugt ist es, wenn die erste Struktur thermisch, mechanisch oder chemisch verfestigt ist.

Unter der ersten Struktur wird ein Faserflächengebilde aus Synthesefasern verstanden, welche thermisch, mechanisch oder mittels Bindemitteln, verfestigt sein kann. Der Vliesstoff der ersten Struktur kann nach unterschiedlichen hinlänglich bekannten Verfahren oder Kombination von verschiedenen Verfahren hergestellt sein: Spinnvliesstoffe, Meltblownvliesstoffe, Komposites aus Spinnvliesstoffen mit Meltblown, trockengelegten Vliesstoff aus Stapelfasern, Nassvliesstoff aus Stapelfasern, Kombinationen aus Trägermaterialien mit Nanofasern oder den jeweiligen Kombination der unterschiedlichen Technologien. Diese unterschiedlichen Vliesstoffherstellungsverfahren sind dem Fachmann hinlänglich bekannt und werden deshalb nicht beschrieben. Spezielle denkbar sind hier auch mehrlagige Vliesstoffstrukturen von groben Fasern (>1dtex) und feineren Fasern (z.B. Microfasern < 1dtex) zur Verwendung als der ersten Struktur.

Um einen progressiven Aufbau des Filtermediums zu ermöglichen, können die Bikomponentenfasern von erster und zweiter Struktur unterschiedliche Faserdurchmesser besitzen.

Es wurde als vorteilhaft erkannt, dass die erste Struktur zu mindestens 30 Gew.%, insbesondere zu mindestens 50 Gew.% aus Bikomponentenfasern besteht (Gew.% meint Gewichtsprozent).

In Weiterbildung des Filtermediums ist die erste Struktur mit einer Elektretfunktionalität, einer antimikrobiellen Ausrüstung und/oder einer Einfärbung ausgestattet. Fasern aus Polypropylene lassen sich z.B. besonders gut dauerhaft elektrostatisch aufladen. Dies kann z.B. über eine Coronaladung erfolgen. Andere Verfahren zur Einbringung von elektrostatischer Ladung sind ebenfalls denkbar.

Die erste Struktur des Filtermediums kann ein Flächengewicht von 20 bis 150 g / m² insbesondere von 40 bis 80 g / m² aufweisen.

Die endlosen Spinnvliesstoff-Fasern, welche auf den vorgelegten Vliesstoff aufgebracht werden, bestehen u.a. aus Bikomponentenfasern. Diese Fasern bestehen aus mindestens zwei Polymerkomponenten. Hierbei kann es sich um Kern/Mantel oder side-by-side Faserstrukturen handeln. Das bevorzugte Polymer von Kern und Mantel (bzw. side-by-side) ist aus der Gruppe der Polyolefinen. Unter Polyolefine verstehen wir Polymere die aus Alkenen herstellt sind. Typische, aber nicht limitierende Beispiele dieser Polymere sind Polypropylene, Polyethylen oder deren CoPolymere.

In einer Ausbildungsvariante kann im Kern der Faser kann aber auch PES eingesetzt werden. Die beiden eingesetzten Polymere von Kern und Mantel (alternativ side by side) unterscheiden sich in ihrem Schmelzpunkt mindestens um 15°C. Der Anteil der beiden Kern- und Mantel- (bzw. side by side-) Komponenten kann zwischen 9:1 und 1:1 variieren, wobei 8:2 und 7:3 bevorzugt sind. Der kleinere Anteil ist die tiefer schmelzende Komponente. Das Flächengewicht der endlos Spinnvliesstoff-Fasern bzw. Filamente beträgt 15 bis 150 g/m², bevorzug 40 bis 80 g/m².

Ist der vorgelegte Vliesstoff in seiner Zusammensetzung asymmetrisch aufgebaut, kann je nach gewünschtem Eigenschaftsprofil die endlos Spinnvliesstofffasern auf unterschiedliche Seiten des vorgelegten Vliesstoffes aufgebracht werden.

Die Erfindung betrifft auch ein Verfahren zur Herstellung eines Filtermediums wie obenstehend beschrieben mit folgenden Schritten:
a) Herstellung der ersten Struktur
b) Zuführen der ersten Struktur in eine Spinnvliesanlage
c) Bespinnen der ersten Struktur mit einer zweiten Struktur zur Schaffung eines einlagigen Faserverbundes.
d) Verfestigen des Faserverbundes

In Weiterbildung des Verfahrens kann in Schritt d) der Faserverbund verpresst und/oder thermisch gebunden und/oder thermisch kalibriert und/oder nachbehandelt werden.

In anderen Worten: Es wird ein Vliesstoff, welcher Bikomponentenfaser enthält, einer Spinnvliesanlage vorgelegt. Dieser vorgelegte Vliesstoff wird mit Endlos-Spinnvliesstoff-Fasern besponnen, welche ebenfalls als Bikomponentenfaser ausgebildet sind. Anschließend wird dieser Faserverbund verpresst, thermisch gebunden oder thermisch kalibriert und ggf. nachbehandelt. Die frisch aufgesponnenen Endlos-Spinnvliesstoff-Fasern bzw. das fließende Polymer sehr leicht bei der thermischen Verfestigung in die vorgelegte Vliesstofflage eindringt. Es kommt überraschenderweise zu einer sehr intensiven Faser-Faserverbindung und führt nach der thermischen Behandlung zu einem einlagigen Faserverbund. Durch das gute Eindringen des aufgespannten Polymers, ist es einfach, einen sehr kompakten steifen, dünnen, einlagigen Vliesstoff mit relativ offener Faserstruktur zu erzeugen, der zudem aus unterschiedlichen Fasertypen und Faserdurchmesser aufgebaut werden kann. Hier ergeben sich einfache Möglichkeiten einer progressiven Vliesstoffstruktur des Faserverbunds.

Bei der Herstellung eines Filtermediums kann in Schritt c) die zweite Struktur auf einer oder auf beiden Seiten der ersten Struktur aufgesponnen werden.

Die Erfindung betrifft weiterhin auch ein Filterelement aufweisend ein wie oben stehend beschriebenes Filtermedium, welches bevorzugt plissiert ist, insbesondere für eine Filterkassette. Die erfindungsgemäßen Filtermedien und die daraus hergestellten Filterelemente können hauptsächlich im Bereich der Luftfiltration eingesetzt werden, speziell für den Fahrzeuginnenraum, für Klimaanlagen, der Luftfiltration von Innenräumen in Gebäuden bzw. Räumen aller Art mittels stationärer und/oder mobiler Filteranlagen, Filterelemente für Staubsauger, in Zügen oder Landmaschinen sowie der Filtration von Luft in technischen Prozesses wie Gasturbinen, Lackieranlagen oder der Lebensmittelverarbeitung um nur einige Beispiele zu nennen.

Die Erfindung betrifft auch die Verwendung eines solchen Filterelements als Partikelfilter. Die erfindungsgemäßen Filtermedien sind Partikelfiltermedien und können dabei als reine Partikelfilter oder in Kombination mit anderen Filtermedien, z.B. adsorbierenden Medien, als Komponente eines Filterelements eingesetzt werden. Zur Vergrößerung der Filtrationsfläche kann das Filtermedium plissiert, d.h. gefaltet sein.

Bei adsorbierenden Materialien kann sich die Adsorptionslage abströmseitig anschließen bzw. auch eine umgekehrte Reihenfolge ist möglich. Durch diese Ausgestaltung können nicht nur Partikel, sondern auch unangenehme Gerüche adsorbiert werden.

Vor diesem Hintergrund könnte die Adsorptionslage Aktivkohlepartikel aufweisen. Das Filtermedium könnte eine Adsorptionslage aus Aktivkohle, Zeolithen oder Ionentauschern bzw. deren Gemische aufweisen. Hierdurch können Schadgase wie Kohlenwasserstoffe, SO₂, NOx, Aldehyde, Ammoniak, VOC oder ähnliche Gase adsorbiert werden.

Die Aktivkohlepartikel werden vorzugsweise mit einem materialeinheitlichen Hotmelt mit dem erfindungsgemäßen einlagigen Material verklebt.

Das Flächengewicht der Adsorptionslage könnte 50 bis 500 g/m² und deren Dicke könnte 0,7 bis 3,0 mm betragen. Ein Filtermedium mit dem erfindungsgemäßen einlagigen Material und einer Adsorptionslage kann insbesondere im gefalteten Zustand als Kombifilter verwendet werden, der Partikel und Schadgase adsorbiert.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die folgenden Materialien dienen als mögliche Beispiele für das erfindungsgemäße, einlagige Filtermedium, zur Verwendung als reiner Partikelfilter oder in Kombination mit einer oder mehreren Adsorptionsanlagen als Kombifilter: c

**Beispiel A:** Ein 65 g/m² Vliesstoff (A1) bestehend aus 100% 28µm PP Bikomponentenfasern (Schmelzpunkt Kern 166°C; Schmelzpunkt Mantel: 145°C) und einer Dicke (DIN EN ISO 9073-2 10 cm², 12.5cN/cm²) von1,09 mm, einer Luftdurchlässigkeit (Prüfgerät Textest 3000 20 cm², bei 200 Pa, DIN ISO 9073-15) von 6390 l/m²s und einer geringen Biegesteifigkeit (ISO 2493, Fa. Frank, Typ 58565, 20x100 mm) von 0,15 Nmm in Längs- und 0,16 Nmm in Querrichtung wird als erste Struktur einer Spinnvliesanlage vorgelegt und mit 78 g/m² 100% endlos PP Bikomponentenfasern als zweite Struktur besponnen (B2). Diese Fasern besitzen einen Schmelzpunkt des Kerns von 166°C und des Mantels von 145°C. Sie besitzen ein Fasertiter von 30µm.

Nach einer Kalibrierung des Komposites aus erster Struktur und zweiter Struktur wird es mittels Heißluft verfestigt, nochmals auf die Zieldicke thermisch kalibriert und mittels Corona elektrostatisch geladen.

Als Referenz dient ein Spinnvliesstoff aus 138 g/m² 100% PP Bikomponentenfasern analog der obigen Versuche. Diese Fasern mit einem Titer von 30 µm werden kalibriert, mittels Heißluft verfestigt, nochmals auf Zieldicke kalibriert und mittels Corona elektrostatisch geladen. Die Fahrweise dieses Spinnvliesstoffes auf der Anlage entspricht der Fahrweise des erfindungsgemäßen Beispiels.

Wie Tabelle 1 zeigt, ergibt sich durch die Erfindung ein einlagiger Faserverbund mit deutlich erhöhter Steifigkeit, Festigkeit und Luftdurchlässigkeit bei gleichem Flächengewicht.

**Tabelle 1**

| | **Messmethode** | **Referenzvliesstoff (einlagig)** | **Erfindungsvliesstoff (einlagig Beispiel A)** |
|---|---|---|---|
| Flächengewicht [g/m²] | | 138 | 138 |
| Dicke [mm] | DIN EN ISO 9073-2 10 cm², 12.5cN/cm² | 0.67 | 0.8 |
| Luftdurchlässigkeit [l/m²g] | Prüfgerät Textest 3000 20 cm², 200 Pa | 1550 | 2220 |
| | DIN ISO 9073-15 | | |
| Biegefestigkeit [Nmm] | ISO 2493 | | |
| | Fa. Frank | längs 1.2 - 1.4 | längs 1.6 - 1.8 |
| | Typ 58565 | quer 0.6 - 0.7 | quer 0.8 - 0.9 |
| | 20x100 mm | | |
| Höchstzugkraft [N/5 cm] | EN 29073-03 | quer 230 | quer 250 |
| | 200 mm/min | längs 504 | längs 550 |
| Höchstzugkraft [%] | EN 29073-03 | quer 65 | quer 60 |
| | 200 mm/min | längs 64 | längs 55 |

Der Referenzvliesstoff und der erfindungsgemäße Vliesstoff aus Beispiel A, werden zu einem Filterelement verarbeitet und Filtrationsmessungen unterzogen. In beiden Fällen besitzt das Filterelement eine Dimension von 182x254 mm.

Das gefaltete Filtermaterial hat eine Faltenhöhe von 35 mm. Das Filterelement besteht aus 51 Doppelfalten mit einem Faltenabstand von 5 mm. Es sind 0,51 m² Filterfläche eingebaut. Geprüft wird der Druckverlust zwischen Anström- und Abströmseite des Filterelements bei unterschiedlichen Volumenströmen nach DIN 71460.

Die Filterelemente werden zusätzlich mit Prüfstaub AC coarse nach DIN 71460 Teil 1 bestaubt und die aufgenommenen Staubmenge bei einem Druckverlustanstieg von 200 Pa ermittelt. Die eingelagerte Staubmenge ist ein Maß der Lebensdauer des Filters und eine größere Menge ist bevorzugt. Der Fraktionsabscheidegrad wurde nach DIN 71460 Teil 1 mittel AC fine ermittelt. Im erfindungsgemäßen Filterelement wurde einmal der vorgelegte Vliesstoff A anströmseitig vermessen und einmal die aufgesponnene Faserlage B angeströmt. In beiden Fällen ergeben sich ergeben sich bei vergleichbarem Abscheideverhalten ein deutlich höheres Staubspeichervermögen mit ähnlichem Druckverlust zwischen Anström- und Abströmseite der Filterkassette (siehe Tabelle 2).

**Tabelle 2:**

| | | Referenzvliesstoff Bsp. A | Erfindungsgemäßer Vliesstoff Bsp. A | |
|---|---|---|---|---|
| | | | anströmseitig Vliesstoff A1 | anströmseitig aufgesponnene Faserlage B2 |
| Druckverlust Filterelement [Pa] | 100 m³/h | 7.7 | 7 | 7.5 |
| | 200 m³/h | 18.5 | 16.5 | 19.6 |
| | 360 m³/h | 41.5 | 38.5 | 32.5 |
| | 600 m³/h | 88 | 85 | 93 |
| Staubspeichervermögen AC coarse [g] | | 46 | 53 | 68 |
| Fraktionsabscheidegra d AC fine 300m³/h bei 1 µm Partikelgröße | % | > 90 | > 90 | > 90 |

**Beispiel B** : Ein 45 g/m² Vliesstoff (D1) bestehend aus 100% 28µm PP Bikomponentenfasern (Schmelzpunkt Kern 166°C; Schmelzpunkt Mantel: 145°C) und einer Dicke von 0,67 mm (DIN EN ISO 9073-2 10 cm², 12.5cN/cm²), und einer sehr geringen Biegsteifigkeit (ISO 2493, Fa. Frank, Typ 58565, 20x100 mm) von 0,07 Nmm in Längs- und 0,08 Nmm in Querrichtung wird als erste Struktur einer Spinnvliesanlage vorgelegt und mit 78 g/m² 100% endlos PP Bikomponentenfasern als zweite Struktur besponnen (B2). Diese Fasern besitzen einen Schmelzpunkt des Kerns von 166°C und des Mantels von 145°C. Sie besitzen ein Fasertiter von 30µm.

Nach einer Kalibrierung des Komposites aus vorgelegtem Vliesstoff und besponnenen Fasern wird es Mittels Heißluft verfestigt, nochmals auf die Zieldicke thermisch kalibriert und mittels Corona elektrostatisch geladen.

Als Referenz dient ein Spinnvliesstoff aus 138 g/m² 100% PP Bikomponentenfasern analog der obigen Versuche. Diese Fasern mit einem Titer von 30 µm werden kalibriert, mittels Heißluft verfestigt, nochmals auf Zieldicke kalibriert und mittels Corona elektrostatisch geladen. Die Fahrweise dieses Spinnvliesstoffes auf der Anlage entspricht der Fahrweise des erfindungsgemäßen Beispiels.

Wie Tabelle 3 zeigt, ergibt sich durch die Erfindung ein einlagiger Faserverbund mit hoher Luftdurchlässigkeit, einer deutlichen Steigerung der Biegesteifigkeit im Vergleich zum Ausgangsmaterial und im Vergleich zu einen Referenzprodukt mit höherem Flächengewicht. Tabelle 4 zeigt für diese erfindungsgemäßen Filtermedien ein hohes Staubspeichervermögen des Filterelements bei niedrigerem Druckverlust im Vergleich zum Referenzmaterial, welches ein hohes Flächengewicht aufweist und damit eigentlich ein höheres Staubspeichervermögen besitzen sollte.

**Tabelle 3**

| | Messmethode | Referenzvliesstoff (einlagig) | Erfindungsvliesstoff (einlagig Beispiel B) |
|---|---|---|---|
| Flächengewicht [g/m²] | | 138 | 116 |
| Dicke [mm] | DIN EN ISO 9073-2 10 cm², 12.5cN/cm² | 0,67 | 0,75 |
| Luftdurchlässigkeit [l/m²g] | Prüfgerät Textest 3000 20 cm², 200 Pa | 1550 | 2360 |
| | DIN ISO 9073-15 | | |
| | ISO 2493 | | |
| Biegefestigkeit [Nmm] | Fa. Frank | längs 1.2 - 1.4 | längs 0,7 |
| | Typ 58565 | quer 0.6 - 0.7 | quer 0,4 |
| | 20x100 mm | | |
| Höchstzugkraft [N/5 cm] | EN 29073-03 | quer 230 | quer 164 |
| | 200 mm/min | längs 504 | längs 350 |
| Höchstzugkraft [%] | EN 29073-03 | quer 65 | quer 46 |
| | 200 mm/min | längs 64 | längs 54 |

**Tabelle 4:**

| | | Referenzvliesstoff Bsp. A | Erfindungsgemäßer Vliesstoff Bsp. B | |
|---|---|---|---|---|
| | | | anströmseiti g Vliesstoff A1 | anströmseitig aufgesponnene Faserlage B2 |
| Druckverlust Filterelement [Pa] | 100 m³/h | 7 | 4 | 4 |
| | 150 m³/h | 12 | 7 | 7 |
| | 300 m³/h | 27 | 19 | 18 |
| | 600 m³/h | 69 | 54 | 54 |
| Staubspeichervermögen SAE coarse [g] | | 50 | 64 | 67 |

Die Erfindung soll an Hand beigefügter Figuren noch näher erläutert werden. Es zeigen
- Fig. 1: ein Schnittbild eines Filtermediums gemäß dem Stand der Technik
- Fig. 2: ein Schnittbild eines Filtermediums gemäß der Erfindung
- Fig. 3: ein Filterelement.

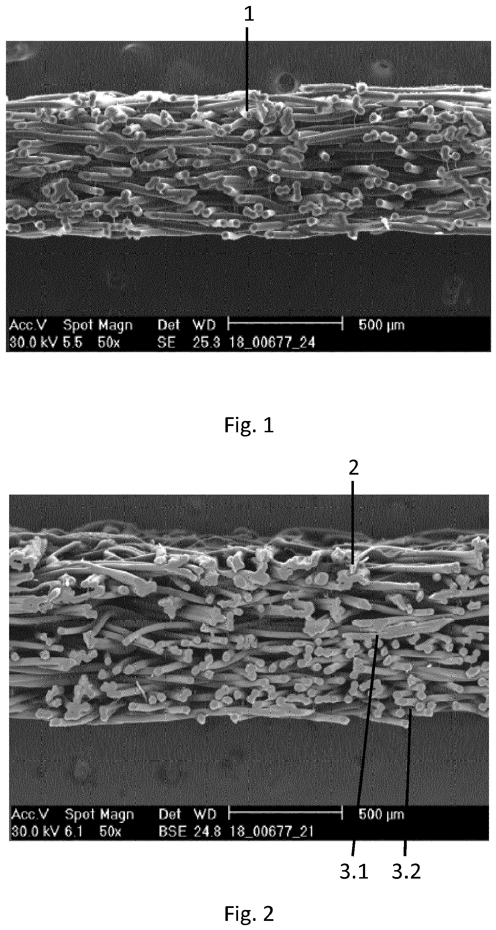

Fig. 1 zeigt ein Schnittbild eines Filtermediums 1 gemäß dem Stand der Technik.

Fig. 2 zeigt ein Schnittbild eines Filtermediums 1 gemäß der Erfindung. Das Filtermedium 1 weist einen Vliesstoff als einlagigen Faserverbund 2 auf. Der Faserverbund 2 besitzt eine erste Struktur 3.1 aus Bikomponentenfasern und eine zweite Struktur 3.2 aus endlosen Bikomponentenfasern, wobei die zweite Struktur 3.2 in die erste Struktur 3.1 eingreift, indem die erste Struktur 3.1 mit der zweiten Struktur 3.2 besponnen ist.

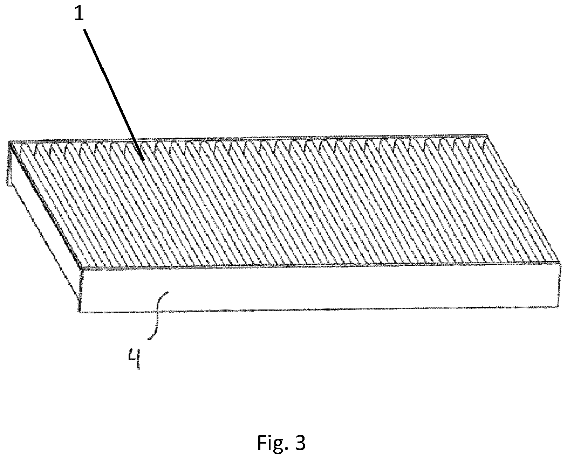

Fig. 3 zeigt ein Filterelement 4 mit einem plissierten Filtermedium 1.

### Bezugszeichenliste

- 1: Filtermedium
- 2: Faserverbund
- 3.1: erste Struktur
- 3.2: zweite Struktur
- 4: Filterelement

## Patentansprüche

1. **Filtermedium** (1) zur Filtration eines Luftstroms mit einem eine Vielzahl von Bikomponentenfasern aufweisenden Vliesstoff
**dadurch gekennzeichnet,**
**dass** der Vliesstoff als einlagiger Faserverbund (2) mit einer ersten Struktur (3.1) aus Bikomponentenfasern und einer zweiten Struktur (3.2) aus endlosen Bikomponentenfasern ausgebildet ist, wobei die zweite Struktur (3.2) in die erste Struktur (3.1) eingreift.

2. Filtermedium nach Anspruch 1 **dadurch gekennzeichnet,**
**dass** die Bikomponentenfasern aus mindestens zwei Polymerkomponenten bestehen, und
**dass** sich die mindestens zwei Polymerkomponenten der Bikomponentenfasern in ihrem Schmelzpunkt um mindestens 15 Grad unterscheiden und insbesondere eine Kern/Mantel-Faserstruktur oder eine side-by-side Faserstruktur besitzen.

3. Filtermedium nach Anspruch 1 oder 2 **dadurch gekennzeichnet,**
**dass** sich die Polymerarten der tiefschmelzenden Polymerkomponente der Bikomponentenfasern von erster und zweiter Struktur (3.1, 3.2) entsprechen.

4. Filtermedium nach einem der vorangehenden Ansprüche **dadurch gekennzeichnet,**
**dass** die Bikomponentenfasern von erster und zweiter Struktur (3.1, 3.2) unterschiedliche Faserdurchmesser besitzen.

5. Filtermedium nach einem der vorangehenden Ansprüche **dadurch gekennzeichnet,**
**dass** die Polymerkomponenten aus Polyolefinen bestehen.

6. Filtermedium nach einem der vorangehenden Ansprüche **dadurch gekennzeichnet,**
**dass** die Bikomponentenfasern der ersten Struktur (3.1) als Stapelfasern, als Spinnvliesstoff-Filamente oder als Meltblown-Filamente ausgeführt sind.

7. Filtermedium nach einem der vorangehenden Ansprüche **dadurch gekennzeichnet,**
**dass** die erste Struktur (3.1) thermisch, mechanisch oder chemisch verfestigt ist.

8. Filtermedium nach einem der vorangehenden Ansprüche **dadurch gekennzeichnet,**
**dass** die erste Struktur (3.1) zu mindestens 30 Gew.%, insbesondere zu mindestens 50 Gew.% aus Bikomponentenfasern besteht.

9. Filtermedium nach einem der vorangehenden Ansprüche **dadurch gekennzeichnet,**
**dass** die erste Struktur (3.1) mit einer Elektretfunktionalität, einer antimikrobiellen Ausrüstung und/oder einer Einfärbung ausgestattet ist.

10. Filtermedium nach einem der vorangehenden Ansprüche **dadurch gekennzeichnet,**
**dass** die erste Struktur (3.1) ein Flächengewicht von 20 bis 150 g / m² insbesondere von 40 bis 80 g / m² aufweist.

11. **Verfahren** zur Herstellung eines Filtermediums (1) nach einem der vorangehenden Ansprüche mit folgenden Schritten:
a) Herstellung der ersten Struktur (3.1)
b) Zuführen der ersten Struktur (3.1) in eine Spinnvliesanlage
c) Bespinnen der ersten Struktur (3.1) mit einer zweiten Struktur (3.2)
d) Verfestigen des Faserverbundes (2)

12. Verfahren zur Herstellung eines Filtermediums nach Anspruch 11, wobei in Schritt d) der Faserverbund (2) verpresst und/oder thermisch gebunden und/oder thermisch kalibriert und/oder nachbehandelt wird.

13. Verfahren zur Herstellung eines Filtermediums nach einem der Ansprüche 11 oder 12,
wobei in Schritt c) die zweite Struktur (3.2) auf einer oder auf beiden Seiten der ersten Struktur (3.1) aufgesponnen wird.

14. **Filterelement** (4) aufweisend ein Filtermedium (1) nach einem der Ansprüche 1 bis 10, insbesondere in plissierter Form und insbesondere für eine Filterkassette.

15. **Verwendung** eines Filterelements (4) nach Anspruch 14 als Partikelfilter für die Filtration von Luft.
